# EUROPÄISCHE PATENTANMELDUNG

(11) **EP 3 438 697 A1**
(43) Veröffentlichungstag der Anmeldung: **06.02.2019**
(21) Anmeldenummer: 18187271.4
(22) Anmeldetag: 03.08.2018
(51) Int. Cl.: G01S 17/42, B60Q 1/00, B60Q 9/00, G01S 17/93, G01S 7/481

(54) **KRAFTFAHRZEUGSCHEINWERFERANORDNUNG**

(30) Priorität: 03.08.2017 DE 102017117591
(71) Anmelder: Automotive Lighting Reutlingen GmbH, 72762 Reutlingen (DE)
(72) Erfinder: LICHT, Martin, 72762 Reutlingen (DE); BUCHBERGER, Christian, 72770 Reutlingen (DE); KNITTEL, Joachim, 72762 Reutlingen (DE)
(74) Vertreter: DREISS Patentanwälte PartG mbB

(57) **Zusammenfassung**

Die Erfindung betrifft eine Scheinwerferanordnung eines Kraftfahrzeugs (32) umfassend mindestens einen Scheinwerfer (1), der eine Lichtquelle (7) zum Aussenden von sichtbarem Licht, eine Strahlungsquelle (10) zum Aussenden von Infrarotstrahlung (11) und eine Lichtaustrittsoptik (16) mit einer Lichteintrittsfläche (17) aufweist, auf welche sichtbares Licht von der Lichtquelle (7) und Infrarotstrahlung (11) von der Strahlungsquelle (10) fällt, und der ein optisches Ausgangs-Umlenkelement (18) aufweist, das die von der Strahlungsquelle (10) ausgesandte Infrarotstrahlung (11) auf die Lichteintrittsfläche (17) der Lichtaustrittsoptik (16) richtet. Es wird vorgeschlagen, dass das optische Ausgangs-Umlenkelement (18) mindestens eine Optik (22, 23) umfasst, welche die von der Strahlungsquelle (10) ausgesandte Infrarotstrahlung (11) zu einem Strahlbündel (24) mit in einer Horizontalebene (HH) vergrößertem Querschnitt (25) und einer Strahlungsverteilung (26) aufweitet, die in einer Brennebene (21) der Lichtaustrittsoptik (16) betrachtet zumindest ein außen in der Strahlungsverteilung (26) zu einer Seite einer Vertikalebene (VV) angeordnetes Intensitätsmaximum (27) aufweist. (Figur 4)

## Beschreibung

Die vorliegende Erfindung betrifft eine Kraftfahrzeugscheinwerferanordnung umfassend mindestens einen Scheinwerfer. Der mindestens eine Scheinwerfer weist eine Lichtquelle zum Aussenden von sichtbarem Licht, mindestens eine Strahlungsquelle zum Aussenden von Infrarotstrahlung und eine Lichtaustrittsoptik mit einer Lichteintrittsfläche auf. Sichtbares Licht von der Lichtquelle und unsichtbare Infrarotstrahlung von der mindestens einen Strahlungsquelle treffen auf die Lichteintrittsfläche der Lichtaustrittsoptik. Ferner weist der mindestens eine Scheinwerfer mindestens ein optisches Ausgangs-Umlenkelement auf, das die von der mindestens einen Strahlungsquelle ausgesandte Infrarotstrahlung auf die Lichteintrittsfläche der Lichtaustrittsoptik richtet.

Ein Scheinwerfer für eine derartige Scheinwerferanordnung für ein Kraftfahrzeug ist bspw. aus der US 7,350,945 B2 bekannt. Dabei dienen die Infrarotstrahlungskomponenten unter anderem dazu, Entfernungen von Objekten, die sich vor dem Kraftfahrzeug befinden und die Infrarotstrahlung reflektieren, zu bestimmen. Die Entfernungsbestimmung mittels Infrarotstrahlung wird auch als Light Detection and Ranging, abgekürzt Lidar, bezeichnet. Bei dem bekannten Scheinwerfer ist ein Infrarotstrahlungsdetektor jeweils in einem Scheinwerfer angeordnet, wobei ein Detektorstrahlengang nicht durch die Lichtaustrittsoptik verläuft.

Bei Lidar wird ein Abstand zu einem Objekt im Vorfeld des Kraftfahrzeugs bestimmt, indem z.B. die Laufzeit eines Infrarotstrahlungsimpulses gemessen wird, der von einer Strahlungsquelle eines Scheinwerfers ausgesandt, von dem Objekt reflektiert und von einem Infrarotdetektor wieder empfangen wird. Bekannte Lidar-Systeme sind derzeit meist noch separate Module, die zusätzlich zu den Scheinwerfern im Kraftfahrzeug angeordnet werden müssen. Einzig aus der genannten US 7,350,945 B2 ist es bekannt, ein Lidar-System in ein Lichtmodul eines Kraftfahrzeugscheinwerfers zu integrieren.

Problematisch bei bekannten Lidar-Systemen ist es, dass der Rückstreuungsquerschnitt von bestrahlten Objekten im Zentrum vor dem Kraftfahrzeug deutlich größer ist als von Objekten, die sich in Seitenbereichen vor dem Kraftfahrzeug befinden. Der Rückstreuungsquerschnitt nimmt also nach außen hin ab. Daher ist bei Objekten, die sich schräg vor dem Kraftfahrzeug bzw. dem Scheinwerfer befinden, das Signal der von dem Objekt zurückgeworfenen Strahlung geringer. Der Grund hierfür liegt in dem schrägen Auftreffwinkel der von der mindestens einen Strahlungsquelle ausgesandten Infrarotstrahlen. Das Rückstreusignal eines herkömmlichen Lidar-Systems nimmt mit dem Einfallswinkel ab, ist also für Objekte am Fahrbahnrand schwächer. Die Ursache für die Signalabnahme steht im Zusammenhang mit dem sog. cos⁴-Gesetz. Das hat zur Folge, dass die Detektion von seitlich vor dem Fahrzeug befindlichen Objekten schwieriger und ungenauer ist.

Ausgehend von dem beschriebenen Stand der Technik liegt der Erfindung die Aufgabe zugrunde, einen Kraftfahrzeugscheinwerfer der eingangs genannten Art dahingehend auszugestalten und weiterzubilden, dass auch seitlich oder schräg vor dem Fahrzeug befindliche Objekte besser bzw. genauso gut erkannt werden können wie Objekte, die sich frontal vor dem Fahrzeug befinden.

Zur Lösung dieser Aufgabe wird ausgehend von dem Kraftfahrzeugscheinwerfer der eingangs genannten Art vorgeschlagen, dass das optische Ausgangs-Umlenkelement mindestens eine Optik umfasst, welche die von der mindestens einen Strahlungsquelle ausgesandte Infrarotstrahlung zu einem Strahlbündel mit in einer Horizontalebene vergrößertem Querschnitt und einer Strahlungsverteilung aufweitet, die in einer Brennebene der Lichtaustrittsoptik betrachtet zumindest ein außen in der Strahlungsverteilung zu einer Seite einer Vertikalebene angeordnetes Intensitätsmaximum aufweist. Die Lichtaustrittsoptik ist bspw. als eine Projektionslinse ausgebildet.

Besonders bevorzugt ist es, wenn die mindestens eine Strahlungsquelle zum Aussenden von gepulster Infrarotstrahlung ausgebildet ist. Mindestens ein Infrarotstrahlungsimpuls wird in ein Vorfeld vor dem Kraftfahrzeug ausgesandt, um Personen und Objekte im Vorfeld zu detektierten. Es wird ein Abstand zu der Person oder dem Objekt im Vorfeld des Kraftfahrzeugs bestimmt, indem z.B. die Laufzeit eines Infrarotstrahlungsimpulses gemessen wird, der von einer Strahlungsquelle ausgesandt, von der Person oder dem Objekt reflektiert und von mindestens einem Infrarotdetektor wieder empfangen wird. Solche Systeme werden auch als Lidar-Systeme bezeichnet.

Bei dem Scheinwerfer mit integriertem Lidar-System gemäß der Erfindung werden die von der Strahlungsquelle des Lidar-Systems ausgesandten Infrarotstrahlen mit Hilfe einer Optik derart aufgeweitet, dass in der Brennebene der Lichtaustrittsoptik eine Strahlungsverteilung erzeugt wird, die so ausgestaltet ist, dass die Intensität ausgehend von dem Zentrum in horizontaler Richtung nach außen hin zunimmt. Die Zunahme der Intensität ist dabei derart, dass die nach außen hin abnehmenden Rückstreuungsquerschnitte von bestrahlten Objekten zumindest teilweise kompensiert werden können. Dies hat den Vorteil, dass Objekte, die sich schräg vor dem Fahrzeug auf der Seite des Intensitätsmaximums der Strahlungsverteilung befinden, besser bzw. genauso gut erkannt werden können wie Objekte, die sich frontal im Zentrum der Strahlungsverteilung vor dem Fahrzeug befinden.

Bevorzugt weist der oder jeder Scheinwerfer eine Freiformoptik oder ein Hologramm auf, welche die Strahlungsverteilung des mindestens einen aufgeweiteten Strahlbündels in die Brennebene der Lichtaustrittsoptik projiziert. Die Strahlungsquelle ist vorzugsweise als eine IR-Laserdiode ausgebildet, die kohärentes, stark gebündeltes Licht aussendet. Jeweils eine der Strahlungsquellen eines Scheinwerfers bildet zusammen mit dem zugeordneten optischen Ausgangs-Umlenkelement eine Lidarquelle eines in den Scheinwerfer integrierten Lidar-Systems.

Um eine verbesserte Detektion sowohl von Objekten zu ermöglichen, die sich schräg links vor dem Fahrzeug befinden, als auch von Objekten, die sich schräg rechts vor dem Fahrzeug befinden, ist es vorteilhaft, wenn die resultierende Strahlungsverteilung auf bezüglich der Vertikalebene gegenüberliegenden Seiten (rechts und links) jeweils ein Intensitätsmaximum aufweist. Eine solche Strahlungsverteilung mit zwei Intensitätsmaxima kann bspw. dadurch erzielt werden, dass die Kraftfahrzeugscheinwerferanordnung zwei Scheinwerfer umfasst, die jeweils auf unterschiedlichen Seiten des Kraftfahrzeugs angeordnet sind. Das optische Ausgangs-Umlenkelement des einen Scheinwerfers ist ausgebildet, die von der mindestens einen Strahlungsquelle des einen Scheinwerfers ausgesandte Infrarotstrahlung zu einem Strahlbündel mit in einer Horizontalebene vergrößertem Querschnitt und einer asymmetrischen Strahlungsverteilung aufzuweiten, die in einer Brennebene der Lichtaustrittsoptik betrachtet ein außen in der Strahlungsverteilung auf einer ersten Seite der Vertikalebene angeordnetes Intensitätsmaximum aufweist. Das optische Ausgangs-Umlenkelement des anderen Scheinwerfers ist ausgebildet, die von der mindestens einen Strahlungsquelle des anderen Scheinwerfers ausgesandte Infrarotstrahlung zu einem Strahlbündel mit in einer Horizontalebene vergrößertem Querschnitt und einer asymmetrischen Strahlungsverteilung aufzuweiten, die in einer Brennebene der Lichtaustrittsoptik betrachtet ein außen in der Strahlungsverteilung auf einer anderen Seite der Vertikalebene angeordnetes Intensitätsmaximum aufweist.

Besonders bevorzugt ist es, wenn das oder jedes optische Ausgangs-Umlenkelement jeweils mindestens eine Optik umfasst, welche die von der mindestens einen Strahlungsquelle des Lidar-Systems ausgesandte Infrarotstrahlung zu einem Strahlbündel mit in einer Horizontalebene vergrößertem Querschnitt und einer Strahlungsverteilung aufweitet, die in einer Brennebene der Lichtaustrittsoptik betrachtet zwei außen in der Strahlungsverteilung und zu beiden Seiten der Vertikalebene angeordnete Intensitätsmaxima aufweist. Auf diese Weise können zu beiden Seiten schräg vor dem Fahrzeug befindliche Objekte besser detektiert werden. Die beiden auf gegenüberliegenden Seiten einer Vertikalebene angeordneten Intensitätsmaxima der Strahlungsverteilung können bspw. mittels mindestens eines Beugungsgitters erzeugt werden, das Bestandteil eines optischen Ausgangs-Umlenkelements des Lidar-Systems ist. Das Beugungsgitter ist im Strahlengang der mindestens einen Optik des Lidar-Systems nachgeordnet. Das Beugungsgitter spaltet das aus der mindestens einen Optik austretende Strahlbündel in zwei Teilstrahlbündel auf, die jeweils eines der Intensitätsmaxima erzeugen.

Jeder der Scheinwerfer der erfindungsgemäßen Kraftfahrzeugscheinwerferanordnung weist vorzugsweise jeweils mindestens einen Infrarotstrahlungsdetektor auf, der ausgebildet ist, von mindestens einer der Strahlungsquellen der Kraftfahrzeugscheinwerferanordnung ausgesandte und von einem Objekt im Vorfeld des Kraftfahrzeugs reflektierte Infrarotstrahlung zu detektieren und ein entsprechendes Sensorsignal zu generieren.

Gemäß einer vorteilhaften Weiterbildung der Erfindung wird vorgeschlagen, dass der mindestens eine Scheinwerfer jeweils mehrere Infrarotstrahlungsdetektoren aufweist, die jeweils ausgebildet sind, von mindestens einer der Strahlungsquellen der Kraftfahrzeugscheinwerferanordnung ausgesandte, von einem Objekt im Vorfeld des Kraftfahrzeugs reflektierte und aus einem bestimmten Winkelbereich auf den Infrarotstrahlungsdetektor einfallende Infrarotstrahlung zu detektieren und ein entsprechendes Sensorsignal zu generieren. Dies ist insbesondere für Scheinwerfer interessant, die den Nahbereich vor dem Fahrzeug überwachen. Dabei ist die Strahlungsdetektoreinrichtung nicht als einzelner Detektor ausgebildet, sondern umfasst mehrere voneinander räumlich getrennte Strahlungsdetektoren, die derart angeordnet sind, dass sie jeweils nur Licht aus einem bestimmten Winkelbereich detektieren können und man daraus eine Entfernungs- und/ oder Richtungsinformation als Messsignal erhält.

Die nachfolgenden Ausführungen hinsichtlich der Breite von Abstrahlkegeln der von der Strahlungsquelle ausgesandten Infrarotstrahlbündel gelten in entsprechender Weise auch für die Detektionskegel der Infrarotdetektoren. Durch Aufweiten des Detektionskegels kann der Nahbereich und durch Fokussieren des Detektionskegels der Fernbereich besser detektiert werden. Dementsprechend kann durch einen aufgeweiteten Abstrahlkegel der Nahbereich und durch Fokussieren des Abstrahlkegels der Fernbereich besser ausgeleuchtet und damit letzten Endes auch besser detektiert werden.

Die Strahlungsdetektoren detektieren jeweils von einem Objekt reflektierte Infrarotstrahlung in einem bestimmten Detektionskegel. Um die reduzierte Reichweite bei einem breiten Detektionskegel zu kompensieren, ist es vorteilhaft, Lidar-Systeme mit unterschiedlichen Detektionskegeln in den beiden Scheinwerfern der Scheinwerferanordnung eines Kraftfahrzeugs vorzusehen. So kann bspw. in einem Scheinwerfer ein sehr breiter Detektionskegel, um damit den Nahbereich besser detektieren zu können, und in dem anderen Scheinwerfer ein fokussierender Detektionskegel, vorgesehen sein, um damit den Fernbereich mit hoher Reichweite besser detektieren zu können.
Vorteilhafterweise weist das oder jedes optische Ausgangs-Umlenkelement eine erste Optik, welche die von der mindestens einen Strahlungsquelle ausgesandte Infrarotstrahlung zu einem Zwischenbündel aufweitet, und eine weitere Optik auf, die das Zwischenbündel zu dem im Vergleich zu dem von der Strahlungsquelle des Lidar-Systems ausgesandten Infrarot-Laserstrahl insgesamt aufgeweiteten Strahlbündel bündelt.

Es ist denkbar, dass der oder jeder Scheinwerfer jeweils mehrere Strahlungsquellen und mehrere optische Ausgangs-Umlenkelemente aufweist. Jeweils eines der optischen Ausgangs-Umlenkelemente ist einer der Strahlungsquellen zugeordnet und jede der Strahlungsquellen erzeugt im Zusammenwirken mit dem zugeordneten optischen Ausgangs-Umlenkelement ein eigenes aufgeweitetes Strahlbündel mit den beiden außenliegenden Intensitätsmaxima. Die Strahlbündel der verschiedenen Strahlungsquellen sind unterschiedlich stark aufgeweitet.

Verschieden aufgeweitete Strahlbündel der erfindungsgemäßen Kraftfahrzeugscheinwerferanordnung können bspw. dadurch realisiert werden, dass eine Strahlungsquelle mit einem zugeordneten optischen Ausgangs-Umlenkelement zur Erzeugung eines fokussierten Strahlbündels in dem linken Scheinwerfer und eine Strahlungsquelle mit einem zugeordneten optischen Ausgangs-Umlenkelement zur Erzeugung eines in der Horizontalebene stärker aufgeweiteten Strahlbündels mit den in der Horizontalebene außen liegenden Intensitätsmaxima in dem rechten Scheinwerfer angeordnet ist.

Alternativ ist es auch denkbar, dass eine Strahlungsquelle mit einem zugeordneten optischen Ausgangs-Umlenkelement zur Erzeugung eines fokussierten Strahlbündels in dem rechten Scheinwerfer und eine Strahlungsquelle mit einem zugeordneten optischen Ausgangs-Umlenkelement zur Erzeugung eines in der Horizontalebene stärker aufgeweiteten Strahlbündels in dem linken Scheinwerfer angeordnet ist. In dieser Konfiguration kann das Strahlbündel des fokussierten Abstrahlkegels auch wie eine Lichtschranke für Objekte genutzt werden, die sich von dem rechten Fahrbahnrand her vor das Fahrzeug bewegen. Dabei ist der Abstrahlkegel möglichst weit außen am Fahrzeug angeordnet und umfasst möglichst parallel Strahlen. Es wäre sogar denkbar, dass der Abstrahlkegel asymmetrisch geformt ist, um einen größeren Bereich vor dem Fahrzeug mit der Lichtschranke zu überprüfen.
Gemäß einer vorteilhaften Ausführungsform der Erfindung wird vorgeschlagen, dass der oder jeder Scheinwerfer mehrere Strahlungsquellen und mehrere optische Ausgangs-Umlenkelemente aufweist. Dabei ist jeweils eines der optischen Ausgangs-Umlenkelemente einer der Strahlungsquellen zugeordnet. Die Strahlungsquellen erzeugen im Zusammenwirken mit dem zugeordneten optischen Ausgangs-Umlenkelement jeweils einen Teil eines gemeinsamen aufgeweiteten Strahlbündels mit den beiden außenliegenden Intensitätsmaxima. Die verschiedenen Strahlungsquellen erzeugen also unterschiedliche Strahlungsverteilungen in der Blendenebene, die sich zu dem aufgeweiteten Strahlbündel mit den vorzugsweise beidseitig einer Vertikalebene außen angeordneten Intensitätsmaxima überlagern.

Besonders bevorzugt ist es, wenn die Strahlungsquellen in Abhängigkeit von einer Fahrsituation des Kraftfahrzeugs angesteuert werden können. Auf diese Weise kann bei mehreren Strahlungsquellen je Lidar-System eine entsprechende Strahlungsquelle genutzt werden, um den jeweiligen Bereich vor dem Fahrzeug bevorzugt anzustrahlen. Eine bevorzugte Ausgestaltung der Kraftfahrzeugscheinwerferanordnung zeichnet sich dadurch aus, dass der oder jeder Scheinwerfer mehrere Strahlungsquellen und mehrere optische Ausgangs-Umlenkelemente aufweist, wobei jeweils eines der optischen Ausgangs-Umlenkelemente einer der Strahlungsquellen zugeordnet ist und die Strahlungsquellen im Zusammenwirken mit dem ihnen jeweils zugeordneten optischen Ausgangs-Umlenkelement jeweils einen Teil eines gemeinsamen aufgeweiteten Strahlbündels mit dem mindestens einen außenliegenden Intensitätsmaximum erzeugen, wobei jeder Teil des Strahlbündels einen bestimmten Winkelbereich anstrahlt.

Bevorzugt ist auch, dass bei mehreren Strahlungsquellen pro Scheinwerfer die Strahlungsquellen in Abhängigkeit von einer Fahrsituation des Kraftfahrzeugs ansteuerbar sind.

Weiter ist bevorzugt, dass die Kraftfahrzeugscheinwerferanordnung zwei Scheinwerfer umfasst, die jeweils auf unterschiedlichen Seiten des Kraftfahrzeugs angeordnet sind, wobei die optischen Ausgangs-Umlenkelemente der beiden Scheinwerfer ausgebildet sind, die von der mindestens einen Strahlungsquelle des einen Scheinwerfers ausgesandte Infrarotstrahlung zu einem Strahlbündel mit in einer Horizontalebene vergrößertem Querschnitt und einer asymmetrischen Strahlungsverteilung aufzuweiten, die in einer Brennebene der Lichtaustrittsoptik betrachtet ein außen in der Strahlungsverteilung auf einer ersten Seite der Vertikalebene angeordnetes Intensitätsmaximum aufweist, und die von der mindestens einen Strahlungsquelle des anderen Scheinwerfers ausgesandte Infrarotstrahlung zu einem Strahlbündel mit in einer Horizontalebene vergrößertem Querschnitt und einer asymmetrischen Strahlungsverteilung aufzuweiten, die in einer Brennebene der Lichtaustrittsoptik betrachtet ein außen in der Strahlungsverteilung auf einer anderen Seite der Vertikalebene angeordnetes Intensitätsmaximum aufweist.

Eine weitere bevorzugte Ausgestaltung zeichnet sich dadurch aus, dass jeweils eine der Strahlungsquellen eines Scheinwerfers zusammen mit dem zugeordneten optischen Ausgangs-Umlenkelement eine Lidar-Quelle bildet.

Bevorzugt ist auch, dass der oder jeder Scheinwerfer eine Freiformoptik oder ein Hologramm aufweist, welche die Strahlungsverteilung des mindestens einen aufgeweiteten Strahlbündels in die Brennebene der Lichtaustrittsoptik projiziert.

Gemäß einer vorteilhaften Weiterbildung der Erfindung wird vorgeschlagen, dass die Kraftfahrzeugscheinwerferanordnung zwei Scheinwerfer umfasst, die jeweils auf unterschiedlichen Seiten des Kraftfahrzeugs angeordnet sind. Die mindestens eine Strahlungsquelle des einen Scheinwerfers wird im Wechsel mit der mindestens einen Strahlungsquelle des anderen Scheinwerfers betrieben. Jeweils die Detektoren beider Scheinwerfer detektieren von dem Objekt reflektierte Infrarotstrahlung und führen diese einer weiteren Auswertung zu. Auf diese Weise ist für Objekte, die in den Strahlbündeln von beiden Scheinwerfern liegen, eine genaue Positionsbestimmung mittels Triangulation möglich. Die Abstrahlkegel entsprechen dabei ungefähr auch dem Detektionskegel der jeweiligen Infrarotdetektoren in den Scheinwerfern. Alternativ kann auch durch ein Überlappen der Detektionskegel darauf geschlossen werden, dass sich Objekt, die sich in beiden Abstrahlkegeln befinden, direkt vor dem Fahrzeug befinden.

Schließlich wird vorgeschlagen, dass die mindestens eine Lichtquelle, die mindestens eine Strahlungsquelle, das mindestens eine optische Ausgangs-Umlenkelement und die Lichtaustrittsoptik eines Scheinwerfers auf einem gemeinsamen Tragrahmen eines Lichtmoduls des Scheinwerfers angeordnet sind, der beweglich in einem Gehäuse des Scheinwerfers gelagert ist.

Weitere Merkmale und Vorteile der vorliegenden Erfindung werden nachfolgend anhand verschiedener bevorzugter Ausführungsbeispiele unter Bezugnahme auf die Figuren näher erläutert. Es zeigen:
- Figur 1: einen Scheinwerfer einer erfindungsgemäßen Kraftfahrzeugscheinwerferanordnung;
- Figur 2: ein Ausführungsbeispiel eines Lichtmoduls des Scheinwerfers aus Figur 1;
- Figur 3: ein Ausführungsbeispiel eines Lidar-Systems des Lichtmoduls aus Figur 2;
- Figur 4: ein Beispiel für eine Strahlungsverteilung des Lidar-Systems aus Figur 3;
- Figur 5: ein Ausführungsbeispiel von Detektionskegeln von Infrarotdetektoren der Lidar-Systeme der Scheinwerfer einer erfindungsgemäßen Kraftfahrzeugscheinwerferanordnung;
- Figur 6: ein weiteres Ausführungsbeispiel eines Lichtmoduls des Scheinwerfers aus Figur 1;
- Figur 7: ein weiteres Ausführungsbeispiel eines Lidar-Systems des Lichtmoduls aus Figur 6;
- Figur 8: noch ein weiteres Ausführungsbeispiel eines Lidar-Systems des Lichtmoduls aus Figur 6;
- Figur 9: noch ein weiteres Ausführungsbeispiel eines Lichtmoduls des Scheinwerfers aus Figur 1;
- Figur 10: ein Ausführungsbeispiel von Abstrahlkegeln von der Lidar-Systeme der Scheinwerfer einer erfindungsgemäßen Kraftfahrzeugscheinwerferanordnung;

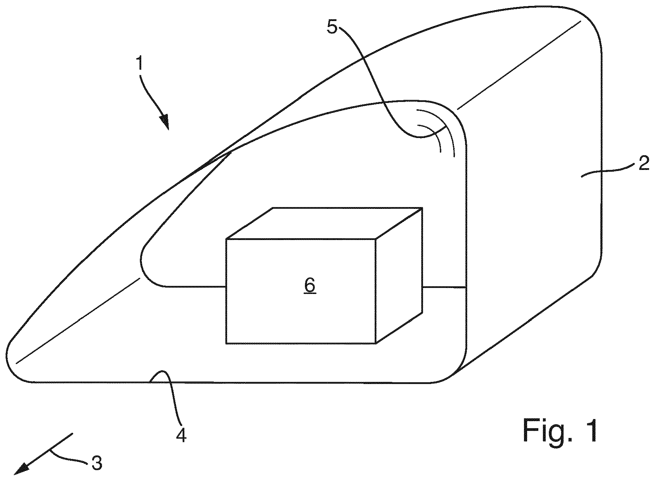

Die vorliegende Erfindung betrifft eine Kraftfahrzeugscheinwerferanordnung mit mindestens einem Kraftfahrzeugscheinwerfer 1, wie er beispielhaft in Figur 1 gezeigt ist. Der Scheinwerfer 1 ist an einer beliebigen Stelle an der Außenseite vorzugsweise in einer geeigneten Einbauöffnung im Frontbereich eines Kraftfahrzeugs angeordnet. Vorzugsweise umfasst das Kraftfahrzeug zwei im Frontbereich zueinander beabstandet angeordnete Scheinwerfer 1, insbesondere einen rechten und einen linken Scheinwerfer. Der Scheinwerfer 1 dient zur Erzeugung von vorgegebenen Lichtverteilungen. Die Lichtverteilungen können beliebige Scheinwerferfunktionen sein, bspw. Abblendlicht, Fernlicht, Nebellicht und/oder beliebige adaptive Lichtverteilungen (z.B. Teilfernlicht).

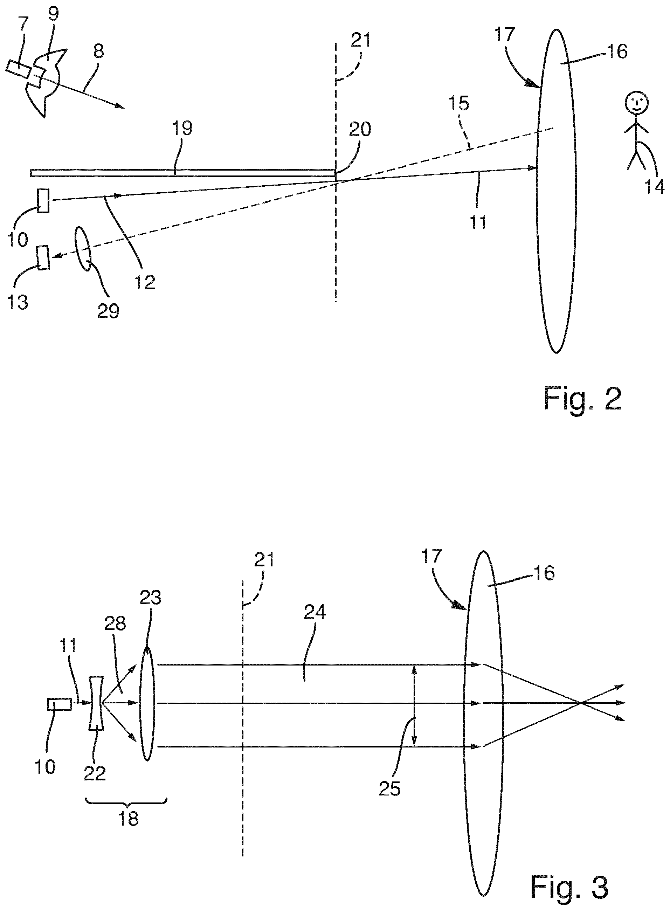

Der Scheinwerfer 1 umfasst ein Gehäuse 2, das vorzugsweise aus einem lichtundurchlässigen Material, insbesondere Kunststoff besteht. In einer Lichtaustrittsrichtung 3 weist das Gehäuse 2 eine Lichtaustrittsöffnung 4 auf, die durch eine Abdeckscheibe 5 verschlossen ist. Die Abdeckscheibe 5 besteht aus einem transparenten Material, bspw. Glas oder Kunststoff. Die Abdeckscheibe 5 ist in diesem Beispiel ohne optisch wirksame Elemente (z.B. Zylinderlinsen oder Prismen) zur Streuung des hindurchtretenden Lichts ausgebildet. Im Inneren des Gehäuses 2 ist mindestens ein Lichtmodul 6 angeordnet, das nachfolgend anhand der Figuren 2 bis 10 näher erläutert wird. Das Lichtmodul 6 dient zur Erzeugung einer oder mehrerer Lichtverteilungen des Scheinwerfers 1 oder eines Teils der Lichtverteilung.

Ein erstes bevorzugtes Ausführungsbeispiel des Lichtmoduls 6 in der Form eines sog. Projektionsmoduls ist beispielhaft und schematisch in Figur 2 gezeigt. Das Lichtmodul 6 umfasst eine Lichtquelle 7 zum Aussenden von sichtbarem Licht in eine Hauptabstrahlrichtung 8. Die Lichtquelle 7 ist bspw. als eine Halbleiterlichtquelle, insbesondere als eine LED, ausgebildet. Diese sendet das Licht in der Hauptabstrahlrichtung 8 in einem 180°-Halbraum aus. Der Lichtquelle 7 kann eine Bündelungsoptik 9 zugeordnet sein, welche das ausgesandte Licht bündelt. In dem gezeigten Beispiel ist die Bündelungsoptik 9 als eine Vorsatzoptik aus einem massiven transparenten Material ausgebildet. Die ausgesandten Lichtstrahlen treten über mindestens eine Eintrittsfläche der Vorsatzoptik in diese ein, werden darin zumindest teilweise an Grenzflächen der Vorsatzoptik mittels Totalreflexion umgelenkt und treten dann über eine Austrittsfläche als ein Lichtbündel wieder aus der Vorsatzoptik aus. Die Bündelung des Lichts erfolgt dabei über Brechung an den Lichteintritts- und -austrittsflächen und durch Totalreflexion an den Grenzflächen. Das von der Lichtquelle 7 ausgesandte Licht dient zur Erzeugung der Lichtverteilung des Scheinwerfers 1 oder eines Teils davon. In dem Beispiel dient das Licht zur Erzeugung einer abgeblendeten Lichtverteilung. Zur Erzeugung einer horizontalen Helldunkelgrenze der abgeblendeten Lichtverteilung verfügt das Lichtmodul 6 ferner über ein Blendenelement 19, das in diesem Beispiel liegend ausgebildet ist und eine im Wesentlichen horizontale Flächenerstreckung aufweist. Durch Abbilden einer Vorderkante 20 des Blendenelements 19 auf der Fahrbahn vor dem Fahrzeug wird die Helldunkelgrenze erzeugt. Das Blendenelement 19 ist vorzugsweise verspiegelt.

Zusätzlich verfügt das Lichtmodul 6 über mindestens eine Strahlungsquelle 10 zum Aussenden von für das menschliche Auge unsichtbarer Infrarotstrahlung 11 in eine Hauptabstrahlrichtung 12. Die Strahlungsquelle 10 ist vorzugsweise als eine IR-Laserdiode ausgebildet, die kohärentes, stark gebündeltes Licht aussendet. Ferner verfügt das Lichtmodul 6 über einen Infrarotstrahlungsdetektor 13, der ausgebildet ist, von der Strahlungsquelle 10 ausgesandte und von einem Objekt 14 im Vorfeld des Kraftfahrzeugs reflektierte Infrarotstrahlung 15 zu detektieren und ein entsprechendes Sensorsignal zu generieren. Ferner umfasst das Lichtmodul 6 eine Lichtaustrittsoptik 16 mit einer Lichteintrittsfläche 17, auf welche sichtbares Licht von der Lichtquelle 7 und Infrarotstrahlung 11 von der Strahlungsquelle 10 fällt. Eine Brennebene der Lichtaustrittsoptik 16 ist mit dem Bezugszeichen 21 bezeichnet. Die Lichtaustrittsoptik 16 ist hier als eine Projektionslinse ausgebildet, welche die Lichtverteilung in der Brennebene 21 auf der Fahrbahn vor dem Fahrzeug abbildet.

Im Strahlengang der Strahlungsquelle 10 kann ein optisches Ausgangs-Umlenkelement 18 (vgl. Figur 3) angeordnet sein, das die von der Strahlungsquelle 10 ausgesandte Infrarotstrahlung 11 auf die Lichteintrittsfläche 17 der Lichtaustrittsoptik 16 richtet. Die Infrarotstrahlungskomponenten 10, 13, 18 dienen unter anderem dazu, Entfernungen von Objekten, wie bspw. des Objekts 14, die sich vor dem Kraftfahrzeug befinden und die Infrarotstrahlung reflektieren, zu bestimmen. Die Entfernungsbestimmung mittels Infrarotstrahlung 11 wird auch als Light Detection and Ranging, abgekürzt Lidar, bezeichnet. Insofern bilden die Infrarotstrahlungskomponenten 10, 18 (sog. Lidar-Quelle) zusammen mit dem Infrarotstrahlungsdetektor 13 ein sog. Lidar-System, das in dem gezeigten Beispiel in das Lichtmodul 6 integriert ist. Insbesondere ist das Lidar-System 10, 13, 18 im Fernlichtteil des Projektionsmoduls 6, d.h. unterhalb des horizontalen Blendenelements 19, angeordnet. Demgegenüber befinden sich die Lichterzeugungskomponenten 7, 9 im Abblendlichtteil des Projektionsmoduls 6, d.h. oberhalb des horizontalen Blendenelements 19.

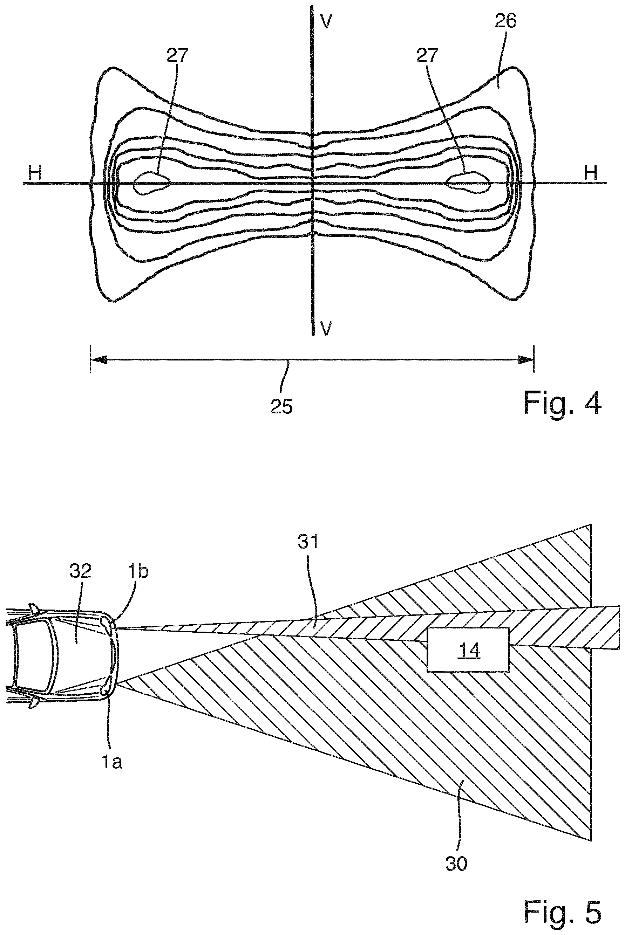

In Figur 3 sind die Lichterzeugungskomponenten 7, 9 im Abblendlichtteil des Projektionsmoduls 6 nicht dargestellt. Die Darstellung beschränkt sich auf die Lidar-Quelle 10, 18 des Lidar-Systems 10, 13, 18 im Fernlichtteil des Projektionsmoduls 6. Erfindungsgemäß wird vorgeschlagen, dass das optische Ausgangs-Umlenkelement 18 mindestens eine Optik 22, 23 umfasst, welche die von der Strahlungsquelle 10 ausgesandte Infrarotstrahlung 11 zu einem Strahlbündel 24 mit in einer Horizontalebene (vgl. Figur 3) vergrößertem Querschnitt 25 und einer Strahlungsverteilung 26 (vgl. Figur 4) aufweitet, die in der Brennebene 21 der Lichtaustrittsoptik 16 betrachtet zumindest ein außen in der Strahlungsverteilung 26 zu einer Seite einer Vertikalebene VV angeordnetes Intensitätsmaximum 27 aufweist. In dem Beispiel aus Figur 4 hat die Strahlungsverteilung 27 zwei Intensitätsmaxima 27, die außen in der Strahlungsverteilung 27 zu beiden Seiten der vertikalen Mittelebene VV ausgebildet sind. In diesem Sinne umfasst das optische Ausgangs-Umlenkelement 18 mindestens eine Optik 22, 23, welche die von der Strahlungsquelle 10 ausgesandte Infrarotstrahlung 11 zu einem Strahlbündel 24 mit in der Horizontalebene HH vergrößertem Querschnitt 25 und einer Strahlungsverteilung 26 aufweitet, die in der Brennebene 21 der Lichtaustrittsoptik 16 betrachtet zwei außen in der Strahlungsverteilung 26 und zu beiden Seiten der Vertikalebene VV angeordnete Intensitätsmaxima 27 aufweist. In der Strahlungsverteilung 26 aus Figur 4 sind Bereiche gleicher Intensität durch sog. Isolux-Linien gekennzeichnet. Die Intensität der Strahlungsverteilung 26 ist im Zentrum am geringsten und steigt zu den beiden Intensitätsmaxima 27 hin an. Bevorzugt entspricht der Intensitätsverlauf eines Schnitts entlang der Horizontalebene HH dem inversen Streuquerschnitt eines Objekts 14, das unter dem jeweiligen Winkel angestrahlt wird. In dem Beispiel der Figur 3 weist das optische Ausgangs-Umlenkelement 18 eine erste Optik 22, welche die von der Strahlungsquelle 10 ausgesandte Infrarotstrahlung 11 zu einem Zwischenbündel 28 aufweitet, und eine weitere Optik 23 auf, die das Zwischenbündel 28 zu dem Strahlbündel 24 bündelt.

In der Strahlungsverteilung 26 nimmt die Intensität ausgehend von dem Zentrum in horizontaler Richtung HH nach außen hin zu. Die Zunahme der Intensität ist dabei derart, dass die nach außen hin abnehmenden Rückstreuungsquerschnitte von bestrahlten Objekten, wie bspw. des Objekts 14, zumindest teilweise kompensiert werden können. Dies hat den Vorteil, dass Objekte 14, die sich schräg vor dem Fahrzeug auf der Seite eines Intensitätsmaximums 27 der Strahlungsverteilung 26 befinden, besser bzw. genauso gut erkannt werden können wie Objekte 14, die sich frontal im Zentrum der Strahlungsverteilung 26 vor dem Fahrzeug befinden.

Für eine optimale Detektionsleistung des Lidar-Systems 10, 13, 18 sind vor dem Infrarotstrahlungsdetektor 13 ebenfalls auf den jeweiligen ausgesendeten Strahlkegel angepasste Optiken 29 angeordnet, die einen entsprechenden nahezu gleichwertigen Empfangskegel ermöglichten.

Um eine reduzierte Reichweite bei breitem Empfangskegel zu kompensieren, ist es vorteilhaft, Lidar-Systeme 10, 13, 18 mit unterschiedlichen Detektionskegeln der Infrarotstrahlungsdetektoren 13 in den beiden Scheinwerfern 1 des Kraftfahrzeugs 32 (vgl. Figur 5) miteinander zu kombinieren. So kann bspw. in einem Scheinwerfer 1a der Infrarotdetektor 13 einen sehr breiten Detektionskegel 30 aufweisen, um damit im Nahbereich besser detektieren zu können. Der Infrarotstrahlungsdetektor 13 in dem anderen Scheinwerfer 1b kann einen fokussierten Detektionskegel 31 haben, der eine große Reichweite hat und Objekte 14 in großen Entfernungen detektieren kann. Bevorzugt ist dabei der Scheinwerfer 1a mit dem breiten Detektionskegel 30 des Infrarotstrahlungsdetektors 13 rechts im Fahrzeug eingebaut, so dass bei Rechtsverkehr Objekte 14 am Fahrbahnrand besser erkannt werden können.

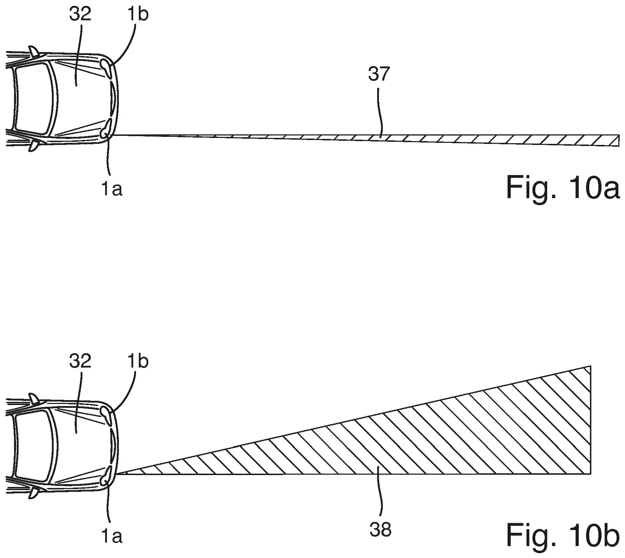

Alternativ zu der Ausführungsform aus Figur 5 ist es auch denkbar, dass das Lidar-System 10, 13, 18 mit fokussiertem Detektionskegel 31 in dem rechten Scheinwerfer 1a und das Lidar-System 10, 13, 18 mit dem breiten Detektionskegel 30 für den Nahbereich im linken Scheinwerfer 1b eingebaut ist. Diese Ausführungsform ist bspw. in Figur 10 dargestellt. In dieser Konfiguration kann der fokussierte Kegel 37 (vgl. Figur 10a) auch wie eine Lichtschranke für Objekte 14 genutzt werden, die sich vom rechten Fahrbahnrand aus vor das Fahrzeug 32 bewegen. Der Detektionskegel 31 ist dabei möglichst weit außen am Fahrzeug 32 angebracht mit möglichst parallelem Strahlkegel. Alternativ kann der als Lichtschranke genutzte Detektionskegel 38 auch asymmetrisch geformt sein (vgl. Figur 10b), um einen größeren Bereich vor dem Fahrzeug 32 mit der Lichtschranke überprüfen zu können. Statt einer Variation des Detektionskegels 38 kann auch der Abstrahlkegel der Lidar-Quellen 10, 18 des rechten Scheinwerfers 1a entsprechend variiert werden und der Detektionskegel 38 symmetrisch gelassen werden.

Gemäß einer weitere Ausführungsformen der Erfindung können bspw. die Strahlungsquellen 10 aus den beiden Scheinwerfern 1a, 1b eines Kraftfahrzeugs im Wechsel betrieben werden, und dabei jeweils die Infrarotstrahlungsdetektoren 13 aus beiden Scheinwerfern 1a, 1b genutzt werden. Somit ist für Objekte 14 (vgl. Figur 5), die in beiden Detektionskegeln 30, 31 liegen, eine genaue Positionsbestimmung mittels Triangulation möglich. Die Abstrahlkegel entsprechen dabei weitgehend den Detektionskegeln 30, 31 der jeweiligen Infrarotstrahlungsdetektoren 13 in den Scheinwerfern 1a, 1b. So würde das Objekt 14 (vgl. Figur 5) bspw. nur von der Lidarquelle 10, 18 des linken Scheinwerfers 1b mit dem fokussierten Abstrahlkegel 31 angestrahlt werden, wobei das reflektierte Infrarotsignal 15 aber von den Infrarotdetektoren 13 beider Scheinwerfer 1a, 1b mit den Detektionskegeln 30, 31 empfangen werden kann. Alternativ kann aber auch über den Überlapp der Detektionskegel 30, 31 darauf geschlossen werden, dass sich Objekte 14, die von beiden Detektionskegeln 30, 31 erfasst werden, direkt vor dem Fahrzeug 32 befinden.

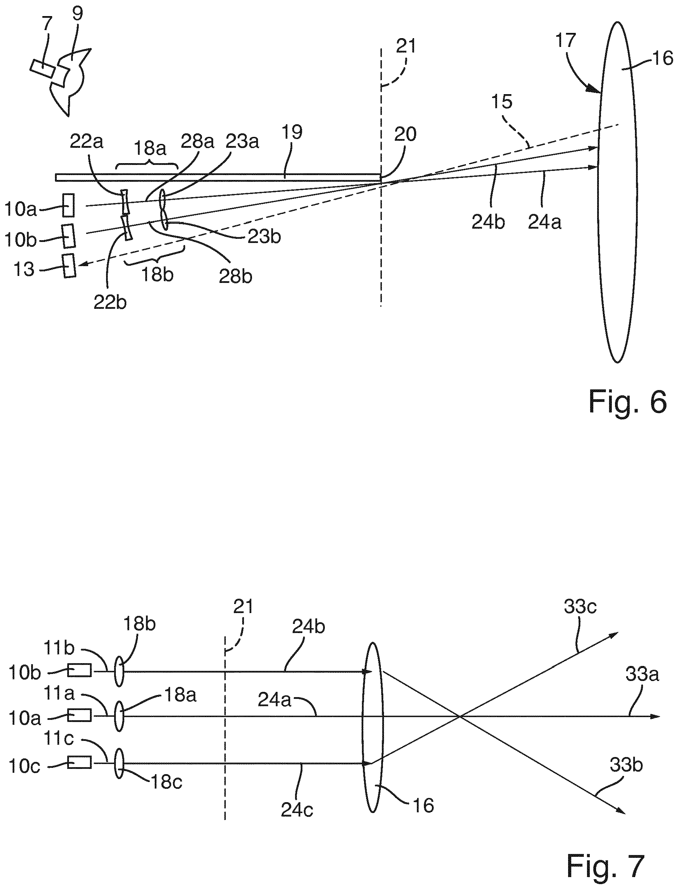

Bei ausreichenden Platzverhältnissen in dem Lichtmodul 6 bzw. in dem Scheinwerfergehäuse 2 können auch in einem Modul 6 unterschiedliche Abstrahlkegel (Strahlbündel 24) realisiert werden, indem bspw. mehrere Strahlungsquellen 10 mit unterschiedlich ausgestalteten optischen Ausgangs-Umlenkelementen 18 mit unterschiedlichen Strahlaufweitungen verbaut werden. Eine solche Ausführungsform ist bspw. in Figur 6 gezeigt. Dort ist ein Lidar-System 10, 13, 18 mit zwei Strahlungsquellen 10a, 10b dargestellt, wobei jeder der Strahlungsquellen 10a, 10b ein optisches Ausgangs-Umlenkelement 18a, 18b zugeordnet ist. Jedes der optischen Ausgangs-Umlenkelemente 18a, 18b umfasst eine erste Optik 22a, 22b zur Strahlaufweitung und eine weitere Optik 23a, 23b zur Bündelung der aufgeweiteten Zwischenbündel 28a, 28b und zur Formung der aufgeweiteten Strahlbündel. Die aufgeweiteten Strahlbündel der beiden Strahlungsquellen 10a, 10b bzw. deren Strahlungsverteilungen 26 sind unterschiedlich ausgebildet. Es wäre denkbar, dass beide Strahlungsverteilungen 26 zwei beidseitig der Vertikalebene VV angeordnete Intensitätsmaxima 27 aufweisen, wobei jedoch die Maxima 27 der beiden Strahlungsverteilungen 26 an unterschiedlichen Stellen in der Horizontalebene HH angeordnet sind. Alternativ können die beiden Strahlungsverteilungen 26 auch jeweils nur ein Intensitätsmaximum 27 aufweisen, wobei die Maxima 27 der beiden Strahlungsverteilungen 26 auf unterschiedlichen Seiten der Vertikalebene VV angeordnet sind.

Gemäß einer anderen Ausführungsform, die in Figur 7 gezeigt ist, können auch mehrere Strahlungsquellen 10a, 10b, 10c mit entsprechenden optischen Ausgangs-Umlenkelementen 18a, 18b, 18c zur Erzeugung eines gemeinsamen Strahlbündels 24 mit der gegebenen Strahlungsverteilung 26 genutzt werden. Die einzelnen Strahlungsquellen 10a, 10b, 10c erzeugen im Zusammenwirken mit dem zugeordneten optischen Ausgangs-Umlenkelement 18a, 18b, 18c jeweils einen Teil 24a, 24b, 24c eines gemeinsamen aufgeweiteten Strahlbündels 24 mit den beiden außenliegenden Intensitätsmaxima 27. Die Strahlungsquellen 10a, 10b, 10c sind vorzugsweise in Abhängigkeit von einer Fahrsituation des Kraftfahrzeugs separat ansteuerbar. Auf diese Weise kann je nach Fahrsituation die entsprechende Strahlungsquelle 10a, 10b, 10c genutzt werden, um den jeweiligen Bereich der Strahlungsverteilung 26 bevorzugt zu beleuchten, z.B. beim Rechtsabbiegen die Strahlungsquelle 10b, die eine an ein Abbiegelicht angelehnten Teil 24b der Strahlungsverteilung 26 erzeugt und einen Winkelbereich 33b anstrahlt. Dementsprechend kann die Strahlungsquelle 10a für Geradeausfahrten und die Strahlungsquelle 10c für Linksabbiegen genutzt werden.

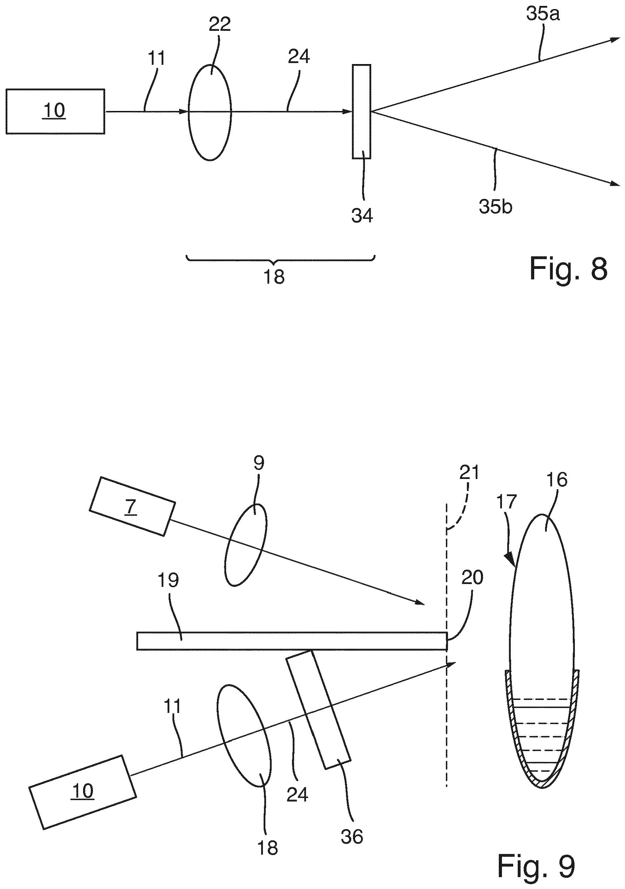

Gemäß der Ausführungsform aus Figur 8 umfasst das optische Ausgangs-Umlenkelement 18 ein im Strahlengang angeordnetes der mindestens einen Optik 22, 23 nachgeordnetes binäres Beugungsgitter 34, welches das aus der mindestens einen Optik 22, 23 austretende Strahlbündel 24 in zwei Teilstrahlbündel 35a, 35b aufspaltet, die jeweils eines der Intensitätsmaxima 27 der Strahlungsverteilung 26 erzeugen. Eine Überlagerung der beiden Teilstrahlbündel 35a, 35b entspricht somit in etwa der Strahlungsverteilung 26 aus Figur 4.

Für die Integration in ein Lichtmodul 6 wird die gewünschte Strahlungsverteilung 26 (bspw. die aus Figur 4) mit Hilfe einer Freiformoptik oder eines Hologramms 36 in die Brennebene 21 der Lichtaustrittsoptik 16 projiziert. Dies ist beispielhaft anhand der Figur 9 veranschaulicht.

Besonders für einen Scheinwerfer 1, der im Nahbereich sensitiv ist (z.B. der rechte Scheinwerfer 1a in Figur 5) ist es von Vorteil, wenn der Detektor nicht nur einen einzelnen Infrarotstrahlungsdetektor 13, sondern mehrere Infrarotstrahlungsdetektoren 13 aufweist, die räumlich getrennt voneinander angeordnet und jeweils ausgebildet sind, dass sie nur die reflektierte Infrarotstrahlung 15 aus einem bestimmten Winkelbereich detektieren und ein entsprechendes Sensorsignal generieren. Aus den Sensorsignalen von mehreren Infrarotstrahlungsdetektoren 13 kann eine Entfernungs- und Richtungsinformation gewonnen werden.

Schließlich ist es auch denkbar, dass die mindestens eine Strahlungsquelle 10, das mindestens eine optische Ausgangs-Umlenkelement 18 und der mindestens eine Infrarotstrahlungsdetektor 13 eines Scheinwerfers 1 auf einem gemeinsamen Tragrahmen angeordnet sind, der beweglich in dem Gehäuse 2 des Scheinwerfers 1 gelagert ist. Es ist denkbar, dass zusätzlich noch die mindestens eine Lichtquelle 7 zum Aussenden von sichtbarem Licht auf dem Tragrahmen angeordnet und zusammen mit dem Lidar-System 10, 13, 18 verschwenkt wird. Auch die Lichtaustrittsoptik 16 mit ihrer Lichteintrittsfläche 17 ist vorzugsweise auf dem gemeinsamen Tragrahmen angeordnet. Es wird also das gesamte Lichtmodul 6 auf dem Tragrahmen angeordnet und mit diesem verschenkt. Dadurch kann die Lidarmessung einer Kurvenfahrt nachgeführt werden. Dies ist insbesondere bei einem fokussierten Abstrahlkegel bzw. einem fokussierten Detektionskegel 31, 37 für eine Detektion im Fernbereich von Vorteil. Insbesondere bei Integration des Lidar-Systems 10, 13, 18 in ein Fernlichtmodul auf einem gemeinsamen Schwenkrahmen kann das gesamte Fernlichtmodul in dem Fall, in dem das Fernlicht nicht aktiviert ist, geschwenkt werden und so mit dem Lidar das Vorfeld gerastert werden. Dadurch kann eine winkelaufgelöste Lidarmessung realisiert werden. Ferner wäre dies selbstverständlich auch bei einer Integration des Lidar-Systems 10, 13, 18 in ein Abblendlichtmodul möglich. Häufig ist das AbblendlichtModul für eine dynamische Kurvenlichtfunktion sowieso schon auf einem Schwenkrahmen montiert und zum Verschwenken in horizontaler Richtung vorgesehen. Diese Funktionalität kann ausgenutzt werden, um auch das Lidar-System 10, 13, 18 mit zu verschenken.

## Patentansprüche

1. Kraftfahrzeugscheinwerferanordnung umfassend mindestens einen Scheinwerfer (1), der eine Lichtquelle (7) zum Aussenden von sichtbarem Licht, mindestens eine Strahlungsquelle (10) zum Aussenden von Infrarotstrahlung (11) und eine Lichtaustrittsoptik (16) mit einer Lichteintrittsfläche (17) aufweist, auf welche sichtbares Licht von der Lichtquelle (7) und Infrarotstrahlung (11) von der mindestens einen Strahlungsquelle (10) fällt, und der mindestens ein optisches Ausgangs-Umlenkelement (18) aufweist, das die von der mindestens einen Strahlungsquelle (10) ausgesandte Infrarotstrahlung (11) auf die Lichteintrittsfläche (17) der Lichtaustrittsoptik (16) richtet, **dadurch gekennzeichnet, dass** das optische Ausgangs-Umlenkelement (18) mindestens eine Optik (22, 23) umfasst, welche die von der mindestens einen Strahlungsquelle (10) ausgesandte Infrarotstrahlung (11) zu einem Strahlbündel (24) mit in einer Horizontalebene (HH) vergrößertem Querschnitt (25) und einer Strahlungsverteilung (26) aufweitet, die in einer Brennebene (21) der Lichtaustrittsoptik (16) betrachtet zumindest ein außen in der Strahlungsverteilung (26) zu einer Seite einer Vertikalebene (VV) angeordnetes Intensitätsmaximum (27) aufweist.

2. Kraftfahrzeugscheinwerferanordnung nach Anspruch 1, **dadurch gekennzeichnet, dass** die mindestens eine Strahlungsquelle (10) zum Aussenden von gepulster Infrarotstrahlung (11) ausgebildet ist.

3. Kraftfahrzeugscheinwerferanordnung nach Anspruch 1 oder 2, **dadurch gekennzeichnet, dass** der mindestens eine Scheinwerfer (1) jeweils mindestens einen Infrarotstrahlungsdetektor (13) aufweist, der ausgebildet ist, von mindestens einer der Strahlungsquellen (10) der Kraftfahrzeugscheinwerferanordnung ausgesandte und von einem Objekt (14) im Vorfeld des Kraftfahrzeugs (32) reflektierte Infrarotstrahlung (15) zu detektieren und ein entsprechendes Sensorsignal zu generieren.

4. Kraftfahrzeugscheinwerferanordnung nach Anspruch 3, **dadurch gekennzeichnet, dass** der mindestens eine Scheinwerfer (1) jeweils mehrere Infrarotstrahlungsdetektoren (13) aufweist, die jeweils ausgebildet sind, von mindestens einer der Strahlungsquellen (10) der Kraftfahrzeugscheinwerferanordnung ausgesandte, von einem Objekt (14) im Vorfeld des Kraftfahrzeugs (32) reflektierte und aus einem bestimmten Winkelbereich auf den Infrarotstrahlungsdetektor (13) einfallende Infrarotstrahlung (15) zu detektieren und ein entsprechendes Sensorsignal zu generieren.

5. Kraftfahrzeugscheinwerferanordnung nach Anspruch 3 oder 4, **dadurch gekennzeichnet, dass** der mindestens eine Infrarotstrahlungsdetektor (13) ausgebildet ist, die Laufzeit eines empfangenen Infrarotstrahlungspulses von der Infrarotstrahlungsquelle (11) zu einer im Vorfeld des Kraftfahrzeugs, in das der Scheinwerfer (1) eingebaut ist, befindlichen Person oder zu einem im Vorfeld befindlichen Objekt und nach Reflexion an der Person oder dem Objekt zurück zu dem mindestens einen Infrarotstrahlungsdetektor (13) zu messen.

6. Kraftfahrzeugscheinwerferanordnung nach Anspruch 5, **dadurch gekennzeichnet, dass** der mindestens eine Infrarotstrahlungsdetektor (13) ausgebildet ist, die Signalstärke des empfangenen Infrarotstrahlungspulses zu messen.

7. Kraftfahrzeugscheinwerferanordnung nach einem der Ansprüche 1 bis 6, **dadurch gekennzeichnet, dass** der oder jeder in ein Kraftfahrzeug eingebaute Scheinwerfer (1) eine imaginäre horizontale Mittelebene aufweist, welche eine Kante (20) eines Blendenelements (19) des Scheinwerfers (1) umfasst, die von der Lichtaustrittsoptik (16) als Helldunkelgrenze auf einer Fahrbahn vor dem Kraftfahrzeug abgebildet wird, wobei ein Lichtmodul zur Erzeugung einer abgeblendeten Lichtverteilung oberhalb der Mittelebene und die mindestens eine Strahlungsquelle (10) und mindestens ein Infrarotstrahlungsdetektor (13) unterhalb der Mittelebene angeordnet sind.

8. Kraftfahrzeugscheinwerferanordnung nach einem der Ansprüche 1 bis 7, **dadurch gekennzeichnet, dass** das oder jedes optische Ausgangs-Umlenkelement (18) jeweils mindestens eine Optik (22, 23) umfasst, welche die von der mindestens einen Strahlungsquelle (10) ausgesandte Infrarotstrahlung (11) zu einem Strahlbündel (24) mit in einer Horizontalebene (HH) vergrößertem Querschnitt (25) und einer Strahlungsverteilung (26) aufweitet, die in einer Brennebene (21) der Lichtaustrittsoptik (16) betrachtet zwei außen in der Strahlungsverteilung (26) und zu beiden Seiten der Vertikalebene (VV) angeordnete Intensitätsmaxima (27) aufweist.

9. Kraftfahrzeugscheinwerferanordnung nach einem der Ansprüche 1 bis 8, **dadurch gekennzeichnet, dass** das oder jedes optische Ausgangs-Umlenkelement (18) eine erste Optik (22), welche die von der mindestens einen Strahlungsquelle (10) ausgesandte Infrarotstrahlung (11) zu einem Zwischenbündel (28) aufweitet, und eine weitere Optik (23) aufweist, die das Zwischenbündel (28) zu dem Strahlbündel (24) mit dem mindestens einen außenliegenden Intensitätsmaximum (27) bündelt.

10. Kraftfahrzeugscheinwerferanordnung nach einem der Ansprüche 1 bis 9, **dadurch gekennzeichnet, dass** das oder jedes optische Ausgangs-Umlenkelement (18) ein im Strahlengang angeordnetes der mindestens einen Optik (22, 23) nachgeordnetes Beugungsgitter (34) aufweist, welches das aus der mindestens einen Optik (22, 23) austretende Strahlbündel (24) in zwei Teilstrahlbündel (35a, 35b) aufspaltet, die gemeinsam die Strahlungsverteilung (26) erzeugen, wobei jeweils eines der Teilstrahlbündel (35a, 35b) eines der Intensitätsmaxima (27) erzeugt.

11. Kraftfahrzeugscheinwerferanordnung nach einem der Ansprüche 1 bis 10, **dadurch gekennzeichnet, dass** der oder jeder Scheinwerfer (1) jeweils mehrere Strahlungsquellen (10a, 10b) und mehrere optische Ausgangs-Umlenkelemente (18a, 18b) aufweist, wobei jeweils eines der optischen Ausgangs-Umlenkelemente (18a; 18b) einer der Strahlungsquellen (10a; 10b) zugeordnet ist und jede der Strahlungsquellen (10a; 10b) im Zusammenwirken mit dem zugeordneten optischen Ausgangs-Umlenkelement (18a; 18b) ein eigenes aufgeweitetes Strahlbündel (24a; 24b) mit dem mindestens einen außenliegenden Intensitätsmaximum (27) erzeugt, und wobei die Strahlbündel (24a; 24b) der verschiedenen Strahlungsquellen (10a, 10b) unterschiedlich stark aufgeweitet sind.

12. Kraftfahrzeugscheinwerferanordnung nach einem der Ansprüche 1 bis 11, **dadurch gekennzeichnet, dass** eine Strahlungsquelle (10) mit einem zugeordneten optischen Ausgangs-Umlenkelement (18) zur Erzeugung eines fokussierten Strahlbündels (31, 37) in dem linken Scheinwerfer (1b) und eine Strahlungsquelle (10) mit einem zugeordneten optischen Ausgangs-Umlenkelement (18) zur Erzeugung des in der Horizontalebene (HH) aufgeweiteten Strahlbündels (24) in dem rechten Scheinwerfer (1a) angeordnet ist.

13. Kraftfahrzeugscheinwerferanordnung nach einem der Ansprüche 1 bis 12, **dadurch gekennzeichnet, dass** dem mindestens einen Infrarotstrahlungsdetektor (13) des linken Scheinwerfers (1b) eine Optik (29) zugeordnet ist, die ausgebildet ist, einen fokussierten Detektionskegel (31, 37) zu realisieren, und dem mindestens einen Infrarotstrahlungsdetektor (13) des rechten Scheinwerfers (1a) eine Optik (29) zugeordnet ist, die ausgebildet ist, einen in der Horizontalebene (HH) aufgeweiteten Detektionskegel (30, 38) zu realisieren.

14. Kraftfahrzeugscheinwerferanordnung nach einem der Ansprüche 1 bis 13, **dadurch gekennzeichnet, dass** eine Strahlungsquelle (10) mit einem zugeordneten optischen Ausgangs-Umlenkelement (18) zur Erzeugung eines fokussierten Strahlbündels (31, 37) in dem rechten Scheinwerfer (1a) und eine Strahlungsquelle (10) mit einem zugeordneten optischen Ausgangs-Umlenkelement (18) zur Erzeugung des in der Horizontalebene (HH) aufgeweiteten Strahlbündels (24) in dem linken Scheinwerfer (1b) angeordnet ist.

15. Kraftfahrzeugscheinwerferanordnung nach einem der Ansprüche 1 bis 14, **dadurch gekennzeichnet, dass** dem mindestens einen Infrarotstrahlungsdetektor (13) des linken Scheinwerfers (1b) eine Optik (29) zugeordnet ist, die ausgebildet ist, einen fokussierten Detektionskegel (31, 37) zu realisieren, und dem mindestens einen Infrarotstrahlungsdetektor (13) des rechten Scheinwerfers (1a) eine Optik (29) zugeordnet ist, die ausgebildet ist, einen in der Horizontalebene (HH) aufgeweiteten Detektionskegel (30, 38) zu realisieren.
